# EUROPÄISCHE PATENTSCHRIFT

(11) **EP 2 309 711 B1**
(45) Veröffentlichungstag und Bekanntmachung des Hinweises auf die Patenterteilung: **05.03.2014**
(21) Anmeldenummer: 09172417.9
(22) Anmeldetag: 07.10.2009
(51) Int. Cl.: H04M 3/14

(54) **Verfahren und Einrichtung zur Verbindungsauslösung in Telekommunikationsnetzen**
Method and device for call clearing in telecommunication networks
Procédé et dispositif de mise en connexion dans des réseaux de télécommunication

(43) Veröffentlichungstag der Anmeldung: 13.04.2011
(73) Patentinhaber: Deutsche Telekom AG, 53113 Bonn (DE)
(72) Erfinder: Unrau, Andreas, 53225, Bonn (DE)
(74) Vertreter: Nern, Peter-Michael

(56) Entgegenhaltungen:
- EP-A2- 0 878 945
- US-A- 5 592 529
- US-B1- 6 453 017

## Beschreibung

Die Erfindung betrifft eine Lösung, welche sich darauf bezieht, im Falle der Beendigung einer Telekommunikationsverbindung durch einen der Teilnehmer, in deren Folge ein Verbindungsabbau erfolgt, die entsprechende Verbindung auch seitens des jeweils anderen Teilnehmers automatisch und somit zuverlässig auszulösen.

Es ist ein seit Langem bekanntes Problem, dass beispielsweise ein Telefonat zwischen zwei Telekommunikationsteilnehmern durch einen der Teilnehmer beendet wird, jedoch der andere Teilnehmer möglicherweise über einen längeren Zeitraum hinweg für Dritte nicht erreichbar ist, weil er gegebenenfalls den Hörer seines Telefons nicht oder nicht richtig aufgelegt hat und dadurch sein Telekommunikationsanschluss durch die Netzeinrichtungen als belegt behandelt wird. In der Folge entgehen dem betreffenden Telekommunikationsteilnehmer möglicherweise für ihn sehr wichtige Anrufe. Auch für Dritte, welche gegebenenfalls über Stunden hinweg versuchen, den betreffenden Telekommunikationsteilnehmer zu erreichen, kann eine solche Situation sehr ärgerlich oder mit bedeutenden Nachteilen verbunden sein.

Neben der eventuellen Nachlässigkeit eines Telekommunikationsteilnehmers, welche darin besteht, beispielsweise den Telefonhörer seines Endgeräts nicht richtig aufzulegen, liegt die Ursache für die Möglichkeit des Entstehens derartiger Situationen in der Art und Weise, wie sich der Verbindungsabbau in Telekommunikationsnetzen, insbesondere in Netzen der Festnetztelefonie, üblicherweise vollzieht. Danach ist es so, dass der Verbindungsabbau durch einen ersten Telekommunikationsteilnehmer initiiert wird, wenn dieser das Gespräch durch Auflegen des Telefonhörers beendet. Als Folge der Beendigung des Telefonats durch den vorgenannten ersten Telekommunikationsteilnehmer beginnt der Verbindungsabbau im Telekommunikationsnetz in Richtung des jeweils anderen beziehungsweise zweiten Teilnehmers. Hierzu werden entsprechende Informationen zur Verbindungssteuerung über die Vermittlungseinrichtungen in Richtung des anderen Teilnehmers übermittelt. In welcher Form dies konkret geschieht, hängt von dem in dem jeweiligen Netz oder den jeweiligen Netzen verwendeten Zeichengabeverfahren ab. Die Übermittlung der Informationen zur Verbindungssteuerung endet damit, dass der dem Telekommunikationsanschluss des zweiten Teilnehmers zugeordnete Knoten, das heißt im Allgemeinen die Ortsvermittlungsstelle, an welche der Telefonanschluss des Teilnehmers angeschlossen ist, dem Endgerät dieses Teilnehmers die Beendigung der Verbindung signalisiert. Der betreffende Teilnehmer muss dann zur tatsächlichen Beendigung der Verbindung beziehungsweise zum Auslösen der Verbindung selber aktiv werden, indem er beispielsweise seinerseits den Telefonhörer auflegt und damit den Gabelschalter seines Telefons betätigt oder indem er eine hierfür vorgesehene Taste an dem von ihm verwendeten Endgerät drückt. Unterlässt er dies, eventuell auch infolge einer Fehlbedienung, aufgrund welcher der Gabelschalter seines Telefons nicht richtig gedrückt wird, so bleibt sein Telekommunikationsanschluss, wie schon beschrieben, im Besetzt-Zustand und ist für Dritte nicht erreichbar.

Da beim Eintreten einer solchen zuvor beschriebenen Situation auch unnötigerweise Netzressourcen blockiert werden und dem jeweiligen Netzbetreiber Verbindungsentgelte durch die Nichterreichbarkeit von Teilnehmern entgehen, sind insbesondere durch die Netzbetreiber in der Vergangenheit unterschiedliche Vorschläge zur Lösung dieses Problems gemacht worden. Derartige, teilweise auch von anderer Seite gemachte Vorschläge betreffen unterschiedliche Verfahren, die jeweils ausschließlich am beziehungsweise im Endgerät selbst realisiert werden. Sie beziehen sich beispielsweise darauf, mittels Detektoren die Aktivitäten im Sprachband zu überwachen, also festzustellen, ob an einem jeweiligen Endgerät trotz eines Belegt-Zustands des betreffenden Telekommunikationsanschlusses über einen längeren Zeitraum hinweg nicht gesprochen wird. Sofern dies der Fall ist, wird hieraus geschlossen, dass eine eigentlich beendete Verbindung seitens des entsprechenden, auf Sprachaktivitäten überwachten Endgeräts durch eine mögliche Fehlbedienung nicht ausgelöst wurde. Zur Beseitigung dieses Zustands wird entweder ein Warnsignal ausgegeben, welches den entsprechenden Telekommunikationsteilnehmer, also den Nutzer des betreffenden Endgeräts, dazu veranlassen soll, die Verbindung nunmehr wirksam auszulösen. Gegebenenfalls ist es auch vorgesehen, dass das Auslösen der Verbindung nach einer längeren Zeitdauer, in welcher keine Sprachaktivitäten detektiert werden, automatisch erfolgt. Eine entsprechende Lösung wird beispielsweise in der DE 43 34 288 A1 beschrieben. Ferner findet sich in der GB 2 245 800 A eine vergleichbare Lösung.

Darüber hinaus wird eine ebenfalls zumindest teilweise vergleichbare Lösung in der US 6,453,017 B1 beschrieben. Gemäß dieser Lösung wird ein Teilnehmer auf eine versehentlich, beispielsweise aufgrund eines Abrutschens des Hörers von dem Gabelschalter aufgrund einer ungewollten Berührung, von einem Endgerät zur Vermittlungsstelle aufgebaute Verbindung durch einen an dem Endgerät eingehenden Signalton, einen so genannten Howler, und eine über einen zweiten Kanal, beispielsweise E-Mail oder Fax, eingehende Nachricht auf den bestehenden Besetztzustand des Endgerätes aufmerksam gemacht. Entsprechend einer offenbar vorgesehenen Weiterbildung kann dabei ein in geeigneter Weise ausgebildetes Endgerät die ungewollte Verbindung nach einer gewissen Dauer auch selbsttätig auslösen. Hierbei wird durch den an dem Endgerät eingehenden Howler ein in dem Endgerät ausgebildeter Timer gestartet und, sofern an dem Endgerät für eine vorgesehene Zeitdauer keine sprachliche Aktivität detektiert wird, die Verbindung durch dazu geeignete Mittel unterbrochen. In jedem Falle erfolgt hierbei das selbsttätige Auslösen der Verbindung, weil durch den Timer gesteuert, mit einer zeitlichen Verzögerung, wobei das den Timer in Gang setzende Signal, nämlich der Howler, über den Sprachkanal übertragen wird. Ebenso wie bei den zuvor beschriebenen Lösungen ist es dabei außerdem von Nachteil, dass die Lösung einen vergleichsweise aufwändigen Aufbau des Endgerätes bedingt, da dieses über Mittel zur Detektion eventueller sprachlicher Aktivitäten verfügen muss, um im Falle des Ausbleibens solcher Aktivitäten die Verbindung auszulösen.

Andere Ansätze zur Lösung des Problems zielen darauf ab, den Zustand einer nicht ausgelösten Verbindung mittels Sensoren festzustellen, welche die Lage des Hörers oder dessen Bewegung erkennen. Auf der Grundlage dazu festgelegter Bedingungen wird dabei in einer die Sensorsignale auswertenden Einheit auf das Vorliegen eines ungewollten Belegt-Zustands geschlossen. In Reaktion hierauf werden dann wiederum Warnsignale ausgegeben oder die Verbindung nach einer entsprechenden Zeitdauer automatisch ausgelöst. Eine solche Lösung wird beispielsweise in der DE 199 19 512 A1 beschrieben.

Darüber hinaus wird in der DE 42 17 540 A1 eine vergleichbare, ebenfalls mit Bewegungssensoren arbeitende Lösung beschrieben. Gemäß dieser Druckschrift wird mittels an einem Endgerät angeordneter Detektoren die Annäherung eines Nutzers des Endgeräts erkannt. Nähert sich der Nutzer an, wird das Endgerät von einem Standby-Modus in einen Betriebsmodus geschaltet. Das Problem wird demnach hier so gelöst, dass das entsprechende Endgerät in einem Grundzustand im Standby ist, bei welchem in jedem Falle eine Verbindungsauslösung gegeben ist, während Verbindungen nur dann bestehen können, wenn sich der Nutzer in vorbestimmter Nähe zu dem Endgerät befindet, also er vorzugsweise den Hörer des Endgeräts in der Hand hält.

Eine gegenüber den zuvor beschriebenen Lösungen einfachere Lösung besteht darin, mittels eines Timers Verbindungen nach einer vorbestimmten Zeit zwangsweise auszulösen. Dies hat jedoch den Nachteil, dass möglicherweise Verbindungen auch ungewollt zwangsgetrennt werden. Auf der anderen Seite kann infolge einer zuvor bestandenen kurzzeitigen Verbindung das Auslösen aufgrund der Timereinstellungen möglicherweise erst mit deutlicher Verzögerung erfolgen, so dass auch in diesem Falle bei einer Fehlbedienung, durch welche keine Auslösung der Verbindung seitens des Nutzers erfolgt, für längere Zeit ein ungewollter Belegt-Zustand besteht.

Demgegenüber haftet den anderen, zuvor beschriebenen Lösungen der Nachteil an, dass sie zum Teil technisch vergleichsweise aufwändig sind, wie zum Beispiel die Überwachung von Aktivitäten im Sprachband, oder aber die Erfassung von Lage und/oder Bewegungen des Endgeräts oder des Nutzers nur bedingt zuverlässig sind, weil eventuelle die Lage oder die Bewegung des Hörer repräsentierende Sensorsignale fehlinterpretiert werden können. Zudem kann auch bei derartigen Lösungen von der Beendigung der Verbindung durch einen Teilnehmer bis zum endgültigen Auslösen der Verbindung seitens des anderen Teilnehmers eine erhebliche Verzögerung entstehen. Im Falle des Einsatzes von Bewegungssensoren besteht außerdem die Gefahr, dass es durch die schon angesprochene Fehlinterpretation von Sensorsignalen zur ungewollten Trennung von Verbindungen kommt. Alle beschriebenen Lösungen sind, wie erkennbar und bereits ausgeführt, ausschließlich im jeweiligen Endgerät implementiert. Sie arbeiten damit unabhängig vom Status oder den Aktionen des zugehörigen Telekommunikationsnetzes, das heißt asynchron zum Telekommunikationsnetz, so dass bereits hierdurch Ungenauigkeiten und Verzögerungen zu erwarten sind.

Aufgabe der Erfindung ist es daher, eine Lösung anzugeben, welche die vorgenannten Nachteile vermeidet und insbesondere ein sicheres und unverzögertes Auslösen von seitens eines Teilnehmers beendeten Telekommunikationsverbindungen gewährleistet. Hierzu sind ein Verfahren anzugeben und eine entsprechende Einrichtung bereitzustellen.

Die Aufgabe wird durch ein Verfahren mit den Merkmalen des Hauptanspruchs gelöst. Eine die Aufgabe lösende Einrichtung ist durch den ersten Sachanspruch charakterisiert. Vorteilhafte Aus- beziehungsweise Weiterbildungen der Erfindung sind durch die jeweiligen Unteransprüche gegeben.

Nach dem zur Lösung der Aufgabe vorgeschlagenen Verfahren wird eine zwischen einem Endgerät eines ersten Teilnehmers und einem Endgerät eines zweiten Teilnehmers bestehende Verbindung nach deren Beendigung durch den ersten Teilnehmer auch in dem Endgerät des zweiten Teilnehmers selbsttätig ausgelöst. Hierdurch wird die erneute telekommunikative Erreichbarkeit des vorgenannten Endgeräts des zweiten Teilnehmers hergestellt. Erfindungsgemäß erfolgt dies dadurch, dass das Auslösen der Verbindung netzseitig gesteuert wird, so dass die Verbindungsauslösung, anders als bei den Lösungen das Standes der Technik synchron mit dem Netz beziehungsweise zu dem den Einrichtungen des Netzes bekannten Verbindungszustand erfolgt. Dazu wird von einer dazu ausgebildeten Steuereinheit der Vermittlungstechnik des Telekommunikationsnetzes, in welches das Endgerät des zweiten Teilnehmers eingebunden ist, bei Beendigung der Verbindung durch den ersten Teilnehmer ein zusätzliches Steuersignal generiert und an das Endgerät des zweiten Teilnehmers übermittelt. Auslösend für die Generierung dieses zusätzlichen Steuersignals und für dessen Übermittlung an das Endgerät des zweiten Teilnehmers ist der Eingang entsprechender auch nach dem Stand der Technik gebräuchlicher Signale der Verbindungssteuerung bei der vorgenannten Steuereinheit der Vermittlungstechnik, wonach die Verbindung durch den ersten Teilnehmer beendet wurde. Das erfindungsgemäße zusätzliche Steuersignal wird unter Nutzung des in dem betreffenden Telekommunikationsnetz für die Zeichengabe verwendeten Protokolls und Kanals über die Teilnehmeranschlussleitung an das Endgerät des zweiten Teilnehmers übertragen. Von dem betreffenden dazu ausgebildeten, mit einer entsprechenden Verarbeitungseinheit versehenen Endgerät des zweiten Teilnehmers wird das eingehende Steuersignal detektiert und dieses Endgerät schließlich durch die ihm zugeordnete oder in das Endgerät integrierte Verarbeitungseinheit unmittelbar in den Freizustand versetzt.

Die vorgenannte Steuereinheit kann, wie bei der Darstellung der erfindungsgemäßen Einrichtung noch näher ausgeführt werden soll, gewissermaßen als Zusatzeinheit einer Vermittlungseinrichtung oder aber als Teil der Vermittlungstechnik an zentraler Stelle in dem Telekommunikationsnetz angeordnet beziehungsweise realisiert sein.

In Weiterbildung der Erfindung ist es vorgesehen, dass die Anwendung des Verfahrens an eine jeweilige Aktivität eines Telekommunikationsteilnehmers oder eines von ihm für die Telekommunikation verwendeten Endgeräts gebunden ist. Eine Möglichkeit besteht darin, dass der jeweilige Teilnehmer, beispielsweise über eine ServiceRufnummer oder über das Internet, einen entsprechenden Dienst, welcher gegebenenfalls kostenpflichtig sein kann, zunächst gesondert aktivieren muss. Denkbar ist es aber auch, dass das Endgerät bei der Herstellung einer Verbindung mit dem Endgerät eines anderen Teilnehmers an das Netz signalisiert, dass es zur Durchführung des Verfahrens ausgebildet und geeignet ist und dass dadurch ein entsprechendes Dienstmerkmal aktiviert wird. Nach der Aktivierung des Dienstes wird dann im Zusammenhang mit dem späteren Abbau der Verbindung durch die hierfür ausgebildete Steuereinrichtung der Vermittlungstechnik das der endgültigen Auslösung der Verbindung dienende Steuersignal generiert und über das Telekommunikationsnetz an das Endgerät des zweiten Teilnehmers übertragen. Die Signalisierung dessen, dass ein Endgerät zur Nutzung des Verfahrens geeignet ist, kann hierbei entweder unter Nutzung von DTMF-Signalen im Sprachband oder, ebenso wie die Übertragung des erfindungsgemäßen Steuersignals zur Auslösung einer Verbindung, unter Nutzung von Protokoll und Kanal für die Zeichengabe erfolgen. Gemäß einer vorgesehenen vorteilhaften Weiterbildung des Verfahrens ist der vorgenannte, durch den zweiten Teilnehmer beziehungsweise dessen Endgerät aktivierte Dienst über das Teilnehmerprofil des besagten zweiten Teilnehmers administrierbar. Gegebenenfalls kann dabei durch den Betreiber des Netzwerks dem Teilnehmer selbst die Möglichkeit zur Administration des Dienstes, beispielsweise wiederum über eine Servicerufnummer oder über das Internet eingeräumt werden. Es kann aber, je nach Beschaffenheit und Implementierung des Dienstes, auch vorgesehen sein, dass der Dienst ausschließlich oder ergänzend durch den Betreiber des betreffenden Telekommunikationsnetzes administrierbar ist.

Eine die Aufgabe lösende und zur Durchführung des Verfahrens ausgebildete Einrichtung besteht aus einer netzseitigen Einheit und einer endgeräteseitigen Einheit. Bei der netzseitigen Einheit handelt es sich um eine als Teil der Vermittlungstechnik ausgebildete Steuereinheit, welche beim Empfang eines die Beendigung der Verbindung signalisierenden Signals ein spezielles zusätzliches Steuersignal generiert und veranlasst, dass dieses zusätzliche Steuersignal zusammen mit dem Signal zum Verbindungsabbau unter Nutzung des für die Zeichengabe verwendeten Protokolls und Kanals über die Teilnehmeranschlussleitung an das zum Empfang des Signals über den Verbindungsabbau bestimmte, zuvor an der Verbindung beteiligte Endgerät eines Teilnehmers übertragen wird. Der endgeräteseitige Teil der erfindungsgemäßen Einrichtung - eine dem letztgenannten Endgerät eines Teilnehmers zugeordnete oder in dieses Endgerät integrierte Verarbeitungseinheit, welche das Steuersignal vorzugsweise über eine Teilnehmeranschlussleitung empfängt - wertet das zusätzliche Steuersignal aus und veranlasst das Endgerät unmittelbar, beispielsweise in analoger Weise zum Auflegen des Hörers, in den Freizustand zu wechseln. Im Hinblick auf die vorstehenden Ausführungen sei angemerkt, dass mit dem Umstand, wonach das erfindungsgemäße Steuersignal zusammen mit der Verbindungsabbauinformation an das Endgerät des zweiten Teilnehmers beziehungsweise an die diesem zugeordnete Verarbeitungseinheit übertragen wird, nicht zwingend eine zeitgleiche Übertragung gemeint ist. Vielmehr werden die Verbindungsabbauinformation und das erfindungsgemäße Steuersignal vorzugsweise sequentiell übertragen, wobei diese sequentielle Übertragung jedoch bei entsprechend aktiviertem Dienst als ein zusammengehörender Verfahrensvorgang aufzufassen ist.

Die zu der erfindungsgemäßen Einrichtung gehörende netzseitige Steuereinheit ist, wie bereits ausgeführt, Teil der Vermittlungstechnik des entsprechenden Telekommunikationsnetzes. Sie kann dabei entsprechend einer möglichen Ausbildungsform der erfindungsgemäßen Einrichtung an oder in (letzteres heißt als integraler Bestandteil) einer Vermittlungseinrichtung, wie insbesondere einer Ortsvermittlungsstelle, ausgebildet sein. Entsprechend einer anderen möglichen Ausbildungsform kann die dennoch zu Vermittlungstechnik gehörende Steuereinheit aber auch als eine zentrale Einheit in dem Telekommunikationsnetz ausgebildet sein. So kann sie beispielsweise als Service Control Point (SCP) innerhalb eines intelligenten Netzes (IN) durch einen entsprechenden Server hard- und software-basiert realisiert sein. Der entsprechende von dem SCP für die Durchführung des erfindungsgemäßen Verfahrens bereitgestellte Dienst ist dann gegebenenfalls vermittels eines SMP (Service Management Point), vorzugsweise, wie schon ausgeführt, über das Teilnehmerprofil des zweiten Teilnehmers administrierbar.

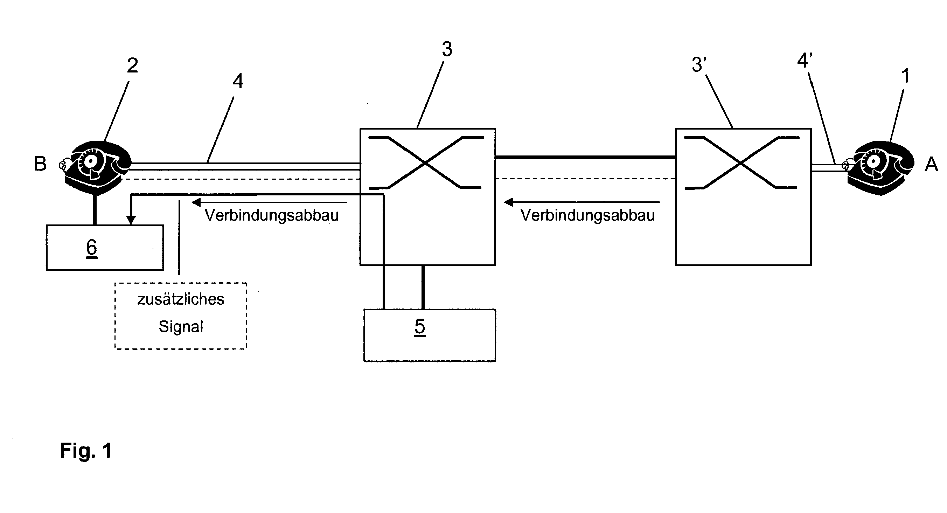

Mit Hilfe der zugehörigen Fig. 1, welche ein Ausführungsbeispiel der erfindungsgemäßen Einrichtung zeigt, soll die Erfindung nochmals veranschaulicht werden.

Die Figur zeigt in einer schematischen Darstellung die wesentlichen, an einer Telekommunikationsverbindung zwischen den Endgeräten zweier Teilnehmer beteiligen Komponenten. Entsprechend dem gezeigten Beispiel handelt es sich hierbei um die schon genannten Endgeräte 1, 2 von Teilnehmern A und B und um Vermittlungseinrichtungen 3, 3' beziehungsweise Netzknoten in einem Telefonfestnetz, mit welchen die Endgeräte 1, 2 über jeweilige Teilnehmeranschlussleitungen 4, 4' verbunden sind. Es sei angenommen, dass zunächst zwischen den Endgeräten 1, 2 eine Gesprächsverbindung besteht, welche durch einen ersten Teilnehmer A an dem Endgerät 1 durch Auflegen des Hörers beendet wird. Beim Auflegen des Hörers an dem betreffenden Endgerät 1 wird über das Telekommunikationsnetz, nämlich insbesondere über die Vermittlungseinrichtung 3', vermittels welcher dieses Endgerät 1 an das Telekommunikationsnetz angeschlossen ist, und über die weitere Vermittlungseinrichtung 3, über welche das andere an der Verbindung beteiligte Endgerät 2 an das Telekommunikationsnetz beziehungsweise Telefonfestnetz angeschlossen ist, eine Verbindungsabbaunachricht übertragen. Diese Verbindungsabbaunachricht wird von einer erfindungsgemäßen Steuereinheit 5 empfangen und erkannt, welche im dargestellten Beispiel Teil der Vermittlungseinrichtung 3 ist, gegebenenfalls aber auch, wie schon ausgeführt, als zentrale Einheit innerhalb des Telekommunikationsnetzes ausgebildet sein. In dem gezeigten Beispiel generiert die genannte Steuereinheit 5 beim Empfang der Verbindungsabbaunachricht ein zusätzliches Steuersignal und veranlasst die zugehörige Vermittlungseinrichtung 3, dieses Steuersignal unter Nutzung des in dem betreffenden Telekommunikationsnetz für die Zeichengabe verwendeten Protokolls und Kanals zusammen mit der beziehungsweise nach der Verbindungsabbaunachricht über die Teilnehmeranschlussleitung 4 an das Endgerät 2 zu übermitteln. Hier wird das vorgenannte zusätzliche Steuersignal durch eine entsprechende Verarbeitungseinheit 6 dieses Endgeräts 2 detektiert und das betreffende Endgerät in den Frei-Zustand versetzt. Die vorgenannte Verarbeitungseinheit 6 kann in das Endgerät 2 integriert oder diesem beigestellt und mit ihm in eine Wirkverbindung gebracht sein.

### Liste der Bezugszeichen

- 1: Endgerät
- 2: Endgerät
- 3, 3': Vermittlungseinrichtung
- 4, 4': Teilnehmeranschlussleitung
- 5: Steuereinheit (der Vermittlungstechnik)
- 6: Verarbeitungseinheit
- A: erster Teilnehmer
- B: zweiter Teilnehmer

## Patentansprüche

1. Verfahren zur Verbindungsauslösung in Telekommunikationsnetzen, durch welches eine zwischen einem Endgerät (1) eines ersten Teilnehmers (A) und einem Endgerät (2) eines zweiten Teilnehmers (B) bestehende Verbindung nach deren Beendigung durch den ersten Teilnehmer (A) auch in dem Endgerät (2) des zweiten Teilnehmers (B) selbsttätig ausgelöst und somit die erneute telekommunikative Erreichbarkeit dieses Endgeräts (2) hergestellt wird, **dadurch gekennzeichnet, dass**, das Auslösen der Verbindung netzseitig gesteuert wird, indem von einer dafür ausgebildeten Steuereinheit (5) der Vermittlungstechnik des Telekommunikationsnetzes, in welches das Endgerät (2) des zweiten Teilnehmers über eine Teilnehmeranschlussleitung (4) eingebunden ist, bei Beendigung der Verbindung durch den ersten Teilnehmer (A) ein zusätzliches Steuersignal generiert und unter Nutzung des in dem Telekommunikationsnetz mit der Steuereinheit (5) für die Zeichengabe verwendeten Protokolls und Kanals erfolgt über die Teilnehmeranschlussleitung (4) an das Endgerät (2) des zweiten Teilnehmers (B) übermittelt wird und indem das dazu ausgebildete, mit einer Verarbeitungseinheit (6) zur Auswertung und Verarbeitung dieses Steuersignals versehene Endgerät (2) des zweiten Teilnehmers (B) nach der Detektion dieses Steuersignals durch die genannte Verarbeitungseinheit (6) unmittelbar in den Frei-Zustand versetzt wird.

2. Verfahren nach einem der Ansprüche 1, **dadurch gekennzeichnet, dass** das selbsttätige Auslösen der Verbindung an eine Aktivierung der dazu ausgebildeten Steuereinheit (5) der Vermittlungseinrichtung (3) gebunden ist, wobei deren Aktivierung durch den zweiten Teilnehmer (B) oder durch das von ihm genutzte Endgerät (2) erfolgt.

3. Verfahren nach Anspruch 2, **dadurch gekennzeichnet, dass** die selbsttätige Auslösung einer Verbindung von dem zweiten Teilnehmer (B) durch den Anruf einer Servicerufnummer oder über das Internet als ein entsprechender Dienst aktivierbar ist.

4. Verfahren nach Anspruch 2, **dadurch gekennzeichnet, dass** das selbsttätige Auslösung einer Verbindung nach deren Beendigung durch den ersten Teilnehmer (A) aufgrund eines zuvor von dem Endgerät (2) des zweiten Teilnehmers (B) beim Aufbau einer Verbindung ausgesandten Signals erfolgt, welches das betreffende Endgerät (2) als ein zur Durchführung des Verfahrens geeignetes Endgerät kennzeichnet und einen entsprechenden Dienst aktiviert.

5. Verfahren nach Anspruch 3 oder 4, **dadurch gekennzeichnet, dass** der betreffende Dienst über das Teilnehmerprofil des zweiten Teilnehmers (B) durch den Teilnehmer (B) selbst und/oder den Betreiber des Telekommunikationsnetzes administrierbar ist.

6. Einrichtung zur Durchführung des Verfahrens nach Anspruch 1, bestehend aus einer netzseitigen Steuereinheit (5) der Vermittlungstechnik eines Telekommunikationsnetzes und einer mit dieser über das betreffende Telekommunikationsnetz verbundenen, endgeräteseitig bei dem zweiten Teilnehmer (B) angeordneten Verarbeitungseinheit (6), **dadurch gekennzeichnet, dass** die netzseitige Steuereinheit (5) zur Generierung und zur Aussendung eines der endgeräteseitigen Verarbeitungseinheit (6) zugeführten Steuersignals ausgebildet ist und dass die endgeräteseitige Verarbeitungseinheit (6) zur Auslösung einer das zugehörige Endgerät (2) beim Empfang des Steuersignals von der netzseitigen Steuereinheit (5) in den Frei-Zustand versetzenden Steuerfunktion ausgebildet ist, wobei das Steuersignal in der netzseitigen Steuereinheit (5) im Moment des Eingangs einer Informationen zur Verbindungssteuerung generiert wird, welche eine vom ersten Teilnehmer (A) an seinem Endgerät (1) eingeleitete Beendigung einer zwischen den Endgeräten (1, 2) der Teilnehmer (A, B) bestehenden Verbindung signalisiert, und wobei das Steuersignal veranlasst durch die Steuereinheit (5) unter Nutzung des in dem Telekommunikationsnetz mit der Steuereinheit (5) für die Zeichengabe verwendeten Protokolls und Kanals über die Teilnehmeranschlussleitung (4) an das Endgerät (2) mit zugehöriger Verarbeitungseinheit (6) übertragen wird.

7. Einrichtung nach Anspruch 6, **dadurch gekennzeichnet, dass** die Steuereinheit (5) an oder in einer Vermittlungseinrichtung (3) ausgebildet ist.

8. Einrichtung nach Anspruch 6, **dadurch gekennzeichnet, dass** die Steuereinheit (5) als eine zentrale Einheit in einem intelligenten Netz ausgebildet und angeordnet ist.

## Claims

1. Method for clearing a call in telecommunications networks, by means of which a call between a terminal (1) belonging to a first subscriber (A) and a terminal (2) belonging to a second subscriber (B) is automatically also cleared, after being terminated by the first subscriber (A), in the terminal (2) belonging to the second subscriber (B) and the renewed ability to reach this terminal (2) by telecommunications is therefore established, **characterized in that** the clearing of the call is controlled on the network side by virtue of an additional control signal being generated by a control unit (5), which is designed for this purpose, for the switching technology of the telecommunications network, in which the terminal (2) belonging to the second subscriber is integrated via a subscriber line (4), when the call is terminated by the first subscriber (A) and being transmitted to the terminal (2) belonging to the second subscriber (B) via the subscriber line (4) using the channel and protocol used for signalling in the telecommunications network with the control unit (5) and by virtue of the terminal (2) belonging to the second subscriber (B), which is designed for this purpose and is provided with a processing unit (6) for evaluating and processing this control signal, being directly changed to the free state by said processing unit (6) after said control signal has been detected.

2. Method according to Claim 1, **characterized in that** the automatic clearing of the call is tied to activation of the control unit (5) of the switching device (3), said control unit being designed for this purpose and being activated by the second subscriber (B) or by the terminal (2) used by the latter.

3. Method according to Claim 2, **characterized in that** the automatic clearing of a call can be activated by the second subscriber (B) as a corresponding service by calling a service number or via the Internet.

4. Method according to Claim 2, **characterized in that** a call is automatically cleared, after it has been terminated by the first subscriber (A), on the basis of a signal previously emitted by the terminal (2) belonging to the second subscriber (B) when setting up a call, which signal identifies the relevant terminal (2) as a terminal suitable for carrying out the method and activates a corresponding service.

5. Method according to Claim 3 or 4, **characterized in that** the relevant service can be administered by the subscriber (B) himself and/or the operator of the telecommunications network using the subscriber profile of the second subscriber (B).

6. Device for carrying out the method according to Claim 1, consisting of a network-side control unit (5) for the switching technology of a telecommunications network and a processing unit (6) which is connected to said control unit via the relevant telecommunications network and is arranged, on the terminal side, at the second subscriber (B), **characterized in that** the networkside control unit (5) is designed to generate and emit a control signal which is supplied to the terminal-side processing unit (6), and **in that** the terminal-side processing unit (6) is designed to trigger a control function which changes the associated terminal (2) to the free state when the control signal is received from the network-side control unit (5), the control signal being generated in the network-side control unit (5) at the moment at which an item of information for controlling the call, which signals termination of a call between the terminals (1, 2) belonging to the subscribers (A, B) which is initiated by the first subscriber (A) on his terminal (1), arrives, and the control unit (5) causing the control signal to be transmitted to the terminal (2) with the associated processing unit (6) via the subscriber line (4) using the channel and protocol used for signalling in the telecommunications network with the control unit (5).

7. Device according to Claim 6, **characterized in that** the control unit (5) is formed on or in a switching device (3).

8. Device according to Claim 6, **characterized in that** the control unit (5) is designed and arranged as a central unit in an intelligent network.

## Revendications

1. Procédé d'interruption d'une liaison dans des réseaux de télécommunication, par lequel une liaison établie entre le terminal (1) d'un premier abonné (A) et le terminal (2) d'un deuxième abonné (B) est interrompue automatiquement dans le terminal (2) du deuxième abonné (B) après qu'elle a été terminée par le premier abonné (A), ce qui rend de nouveau ce terminal (2) accessible par télécommunication,
**caractérisé en ce que**
l'interruption de la liaison est commandée depuis le réseau par le fait qu'une unité de commande (5) de la technique de transmission, configurée dans ce but, du réseau de télécommunication dans lequel le terminal (2) du deuxième abonné est intégré par l'intermédiaire d'un conducteur (4) de raccordement d'abonné, délivre un signal de commande supplémentaire lorsque la liaison est interrompue par le premier abonné (A) et le transmet par l'intermédiaire du conducteur (4) de raccordement d'abonné au terminal (2) du deuxième abonné (B) en recourant au protocole et au canal utilisés dans le réseau de télécommunication pour l'envoi de signes par l'unité de commande (5), et par le fait que le terminal (2) du deuxième abonné (B), configuré dans ce but avec une unité de traitement (6) qui évalue et traite ce signal de commande, est placé directement à l'état libre après la détection de ce signal de commande par ladite unité (6) de traitement.

2. Procédé selon la revendication 1, **caractérisé en ce que** l'interruption automatique de la liaison est associée à l'activation de l'unité de commande (5), configurée dans ce but, du dispositif de transmission (3), cette activation s'effectue par le deuxième abonné (B) ou par le terminal (2) qu'il utilise.

3. Procédé selon la revendication 2, **caractérisé en ce que** l'interruption automatique d'une liaison peut être activée par le deuxième abonné (B) en appelant un numéro d'appel de service ou par internet utilisé comme service approprié.

4. Procédé selon la revendication 2, **caractérisé en ce que** l'interruption automatique d'une liaison après qu'elle a été terminée par le premier abonné (A) s'effectue sur base d'un signal émis précédemment par le terminal (2) du deuxième abonné (B) lors de l'établissement de la liaison, ce signal caractérisant le terminal (2) concerné comme terminal convenant pour l'exécution du procédé et activant un service approprié.

5. Procédé selon les revendications 3 ou 4, **caractérisé en ce que** le service concerné peut être administré par l'intermédiaire du profil du deuxième abonné (B), par l'abonné (B) lui-même et/ou par le gestionnaire du réseau de télécommunication.

6. Dispositif en vue de l'exécution du procédé selon la revendication 1, constitué d'une unité de commande (5) prévue sur le réseau, réalisée dans la technologie de transmission, d'un réseau de télécommunication, et d'une unité de traitement (6) raccordée à cette unité de commande par l'intermédiaire du réseau de télécommunication concerné et disposée sur le terminal du deuxième abonné (B),
**caractérisé en ce que**
l'unité de commande (5) du réseau est configurée pour produire et émettre un signal de commande qui est apporté à l'unité de traitement (6) du terminal,
**en ce que** l'unité de traitement (6) du terminal est configurée pour interrompre une fonction de commande qui place le terminal (2) associé à l'état libre lors de la réception du signal de commande en provenance de l'unité de commande (5) du réseau,
**en ce que** le signal de commande est produit dans l'unité de commande (5) du réseau au moment de l'entrée d'une information concernant la commande de la liaison qui signale la fin, introduite par le premier abonné (A) sur son terminal (1), d'une liaison établie entre les terminaux (1, 2) des abonnés (A, B) et
**en ce que** le signal de commande est transmis par l'intermédiaire du conducteur (4) de raccordement d'abonné au terminal (2) qui possède l'unité de traitement (6) associé par l'unité de commande (5) en recourant au protocole et au canal utilisés pour l'introduction de signes dans le réseau de télécommunication doté de l'unité de commande (5).

7. Dispositif selon la revendication 6, **caractérisé en ce que** l'unité de commande (5) est formée sur ou dans le dispositif de transmission (3).

8. Dispositif selon la revendication 6, **caractérisé en ce que** l'unité de commande (5) est configurée et disposée comme unité centrale dans un réseau intelligent.
